# EUROPEAN PATENT SPECIFICATION

(11) **EP 0 811 877 B1**
(45) Date of publication and mention of the grant of the patent: **15.10.2003**
(21) Application number: 97201634.9
(22) Date of filing: 03.06.1997
(51) Int. Cl.: G03B 42/04

(54) **Cassette and method for daylight-loading a photographic sheet pack**
Kassette und Verfahren zum Laden einer Filmblattpackung bei Tageslicht
Cassette et méthode pour charger à la lumière ambiante un paquet de feuilles photographiques

(30) Priority: 06.06.1996 EP 96201583
(43) Date of publication of application: 10.12.1997
(73) Proprietor: AGFA-GEVAERT, 2640 Mortsel (BE)
(72) Inventor: Dirx, Lieven, 2640 Mortsel (BE)

(56) References cited:
- EP-A- 0 313 686
- EP-A- 0 442 543
- DE-U- 9 005 610

## Description

### BACKGROUND OF THE INVENTION

### Field of the invention.

The present invention relates to a cassette and a method for daylight-loading a photographic sheet pack in a photographic processor.

### Description of the prior art.

It is known to avoid the use of a darkroom for loading light-sensitive films into a film processor such as a cassette-loading apparatus which automatically reloads radiographic film cassettes with a fresh film after an X-ray exposed film has been removed.

These apparatus usually comprise a film supply magazine in the form of a drawer or the like that can be opened and into which a lighttightly wrapped stack of films is put in daylight conditions. Next, the drawer is closed and an appropriate mechanism cuts the wrapper so that it can be peeled from the film stack manually or automatically. One example of suchlike system is disclosed in US-A-4 909 389 relating to a film-sheet package for use in the magazine of a reloader for radiographic film cassettes. The film wrapper is in the form of a sleeve having a sealed flap for engagement by a winding mechanism. The end opposite to the sealed flap has an open flap folded inwardly to lighttightly close the package. Opening of the package occurs by winding the sealed flap by means of a winding mechanism, the film stack as such being withheld, so that the sleeve is stripped from the stack of film sheets. Another example of suchlike system is disclosed in Research Disclosure 22936 of May 1983, Havant, Hampshire, GB.

While these systems work satisfactorily for radiographic film, they are unsuited for aluminium offset printing plates, that e.g. must be image-wise exposed in a platesetter, because such plates have right, sharp corners as distinct from the rounded corners of X-ray film, and also the size of these plates can amount to 81 x 111 cm, and the weight of a stack of 30 of them can amount up to 50 kg.

An improved method for lighttightly wrapping and daylight-loading plates of the type referred to has been disclosed in EP 0 718 683 A2 assigned to the same assignee as the one of the present application. This method comprises the steps of wrapping a stack of light-sensitive sheets in a wrapper formed by two congruent lighttight wrapping foils and providing such wrapper with a first peripheral lighttight closure spaced from the four edges of said stack of sheets, providing said wrapper with a clamping, second peripheral lighttight closure located between said first one and the perimeter of said sheet stack, opening said first closure in daylight and loading said wrapped stack of sheets while still closed by said second closure in an opened cabinet, lighttightly closing said cabinet, unclamping said second closure and removing the wrapping foil lying on top of said sheets to set them free for further processing.

DE-9005610-U discloses a daylight loading X-ray sheet pack cassette arranged to receive a pack, the wrapper of which consists of a sleeve having, at the one end, a tongue which emerges from the cassette when it is closed and which allows to manually tear the wrapper at this end, and at the other end, another tongue which also emerges from the cassette and which allows by means of a crank mechanism to pull away the whole sleeve from the cassette, once the first tongue has been severed, whilst the pack remains stripped therein.

### SUMMARY OF THE INVENTION.

It is one object of the present invention to provide a novel cassette which is excellently suited for carrying out the method described hereinbefore.

It is a further object to provide an improved method for daylight-loading a photographic sheet pack in a photographic processor.

### Statements of the invention.

In accordance with the present invention a cassette for daylight-loading a photographic sheet pack in a photographic processor, said sheet pack being of a type comprising a stack of rectangular photographic light-sensitive sheets wrapped in a wrapper of a size larger than that of the sheets, is characterised in that it comprises :
- a rectangular base with a bottom wall and peripheral wall means providing an interior space within which the sheet pack can fit, and
- a cassette lid fitting on the base comprising rectangular frame means arranged for lighttightly co-operating with said peripheral wall means and a sub-lid lighttightly fitting on said frame means.

A cassette according to the invention can have generally the form of conventional photographic sheet cassettes designed for hand-handling but, considering its particular field of application, it is suitably arranged for co-operation with, or for making part of, a carriage or a drawer arranged for supporting the cassette and transferring it from a preparation position outside of a processor to a cassette-opening and unloading position inside such processor.

The term "processor" stands in the present description in particular for a so-called "computer-to-plate" imagesetter in which an imagewise modulated laser beam writes an image on an offset printing plate, but it is clear that it also covers more conventional machines e.g. one wherein an image is optically projected on the plate and next developed.

Suitable embodiments of a cassette according to the invention are as follows.

The rectangular frame means of the lid of the cassette has a size generally co-extensive with the peripheral wall means of the base.

The cassette comprises at least three bars provided on the lateral sides of said base for controlling the lateral position of said lid on said base.

The cassette comprises positioning means for controlling the position of said lid also in the direction of said fourth lateral side.

The cassette comprises frame-locking means for locking the frame of the lid to the base.

The cassette sub-lid is completely removable from the frame and has means providing a lighttight fit with said frame.

The cassette has adjustable means for locating photographic sheet packs of different sizes at the correct place in the cassette base.

The present invention includes also a method for daylight-loading a photographic sheet pack in a photographic processor.

In accordance with the invention a method for daylight-loading a photographic sheet pack in a photographic processor, said sheet pack being of a type comprising a stack of rectangular photographic sheets wrapped in an oversized wrapper, the extending portions of the wrapper being back-folded on the sheet pack, comprises the steps of:
- unfolding the back-folded wrapper portions and putting said film pack in a cassette comprising a base and a lid lighttighly fitting thereon while yet leaving a peripheral gap through which a peripheral portion of the unfolded wrapper can protrude out of the cassette,
- cutting the wrapper protruding out of the cassette, and removing its outer portion, thereby leaving separate wrapping foils inside of the cassette,
- pulling away the wrapping foil adjacent to the cassette lid through said peripheral gap, and
- introducing the cassette thus prepared in said photographic processor, lighttigthly closing the processor, and having the lid of the cassette removed to render the photographic sheets accessible for a sheet removing mechanism.

According to a suitable embodiment of the method according to the invention, sheet packs of different sizes are wrapped in wrappers all having the same overall dimensions so that such different sheet packs can be loaded in one cassette size. Suchlike sheet packs all can take a central position in the cassette, but they can also be arranged for taking an assymetric position, e.g. one having one corner of a cassette as reference position.

The method according to the invention has been developed in particular in connection with the daylight-loading of aluminium offset printing plates in a computer-to-plate imagesetter, but the foregoing makes it clear that the scope of the invention is not limited to this particular application.

### BRIEF DESCRIPTION OF THE DRAWINGS

The invention will be described hereinafter by way of example with reference to the accompanying drawings, wherein :
Fig. 1 is a perspective view of one embodiment of a cassette according to the present invention, the cassette being open and loaded with a fresh sheet pack,
Fig. 2 is a perspective view of the cassette of Fig. 1, the oversized flaps of the wrapper being unfolded,
Fig. 3 shows the casette of Fig. 2, the cassette lid being installed,
Fig. 4 shows the cassette of Fig. 3, the frame of the lid being clamped and the oversize wrapper being cut and removed,
Fig. 5 shows the cassette of Fig. 4, the top foil of the wrapper being pulled-out from the cassette, and
Fig. 6 shows the cassette sub-lid being removed.
Fig. 7 is a diagrammatic view of a platesetter arrangement with a plate handler at its input,
Figs. 8 to 12 are enlarged cross-sectional views in a vertical plane comprising line 8-8 of Fig. 1.

### Detailed description of the invention

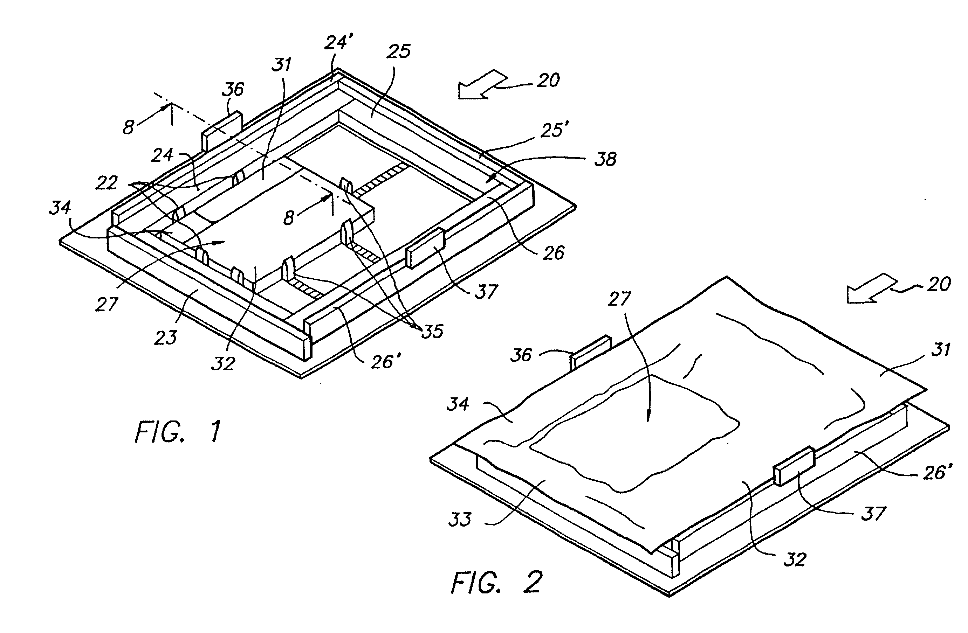

Fig. 1 shows one embodiment of the base of a cassette according to the invention. Base 20 comprises a sturdy bottom wall 21, made of plywood, aluminium, reinforced plastic or the like, onto which are mounted four upstanding bars 23, 24, 25 and 26 forming a rectangular frame defining an interior space within which a lighttight sheet pack 27 is located.

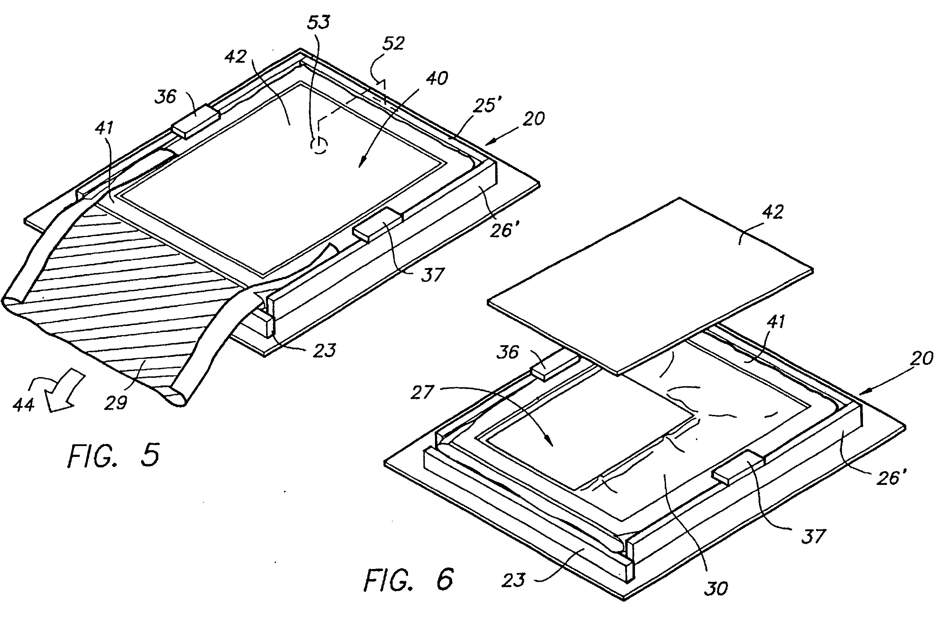

Sheet pack 27 is of a type comprising a stack of rectancular light-sensitive aluminium offset printing plates wrapped in an oversized wrapper formed by two congruent lighttight wrapping foils 29 and 30 (see Figs. 5 and 6) made of a strong and lighttight plastic such as VALERON (Tradename for a biaxially stretched polyethylene wrapping foil manufactured by VAN LEER Plastics Inc., USA) and heat-sealed to each other at their edges to form a light- and airtight protection for the plates. The four oversize flaps of the wrapper are folded on top of the pack, e.g. flaps 31, 32 and 34, 33 being not visible in this figure.

The plate size being smaller than the largest size the cassette can accept, the sheet pack is kept at the desired location by means of laterally adjustable vertical fingers 35. Thus, a corner of the interior space of the cassette is used as a reference point for different sizes of cassettes. Stationary fingers, such as 22 limit the contact of the sheet pack with the corresponding inside wall surfaces of the base to a reduced surface only.

The top surfaces of frame bars 23, 24, 25 and 26 lie in one horizontal plane and constitute thereby a rectangular peripheral platform 38 surrounding the interior space of the cassette base. The height of this platform 38 corresponds almost with that of the sheet pack. Bars 24, 25 and 26 are provided with raised bars 24', 25' and 26', forming a frame within which the lid of the cassette can fit, and which thereby control the lateral position of the lid on the base in three directions. Such control is not obtained in the direction of wall 23, but can be performed by a clamp retaining the lid of a closed cassette (see later).

Clamps 36 and 37 are swingable and are arranged to clamp the lid of the cassette on the base.

Fig. 2 shows loaded base 20 with the oversize flaps 31 to 34 of sheet pack 27 unfolded so as to extend on all four sides of the base beyond peripheral platform 38. The figure clearly shows that unfolded flaps 33 and 34 have approximately the same width, whereas flaps 31 and 32 are notably wider. This difference in width depends on the size of the sheet pack in relation to the cassette and it will be understood that a sheet pack that completely fills the cassette will have flaps of nearly equal widths.

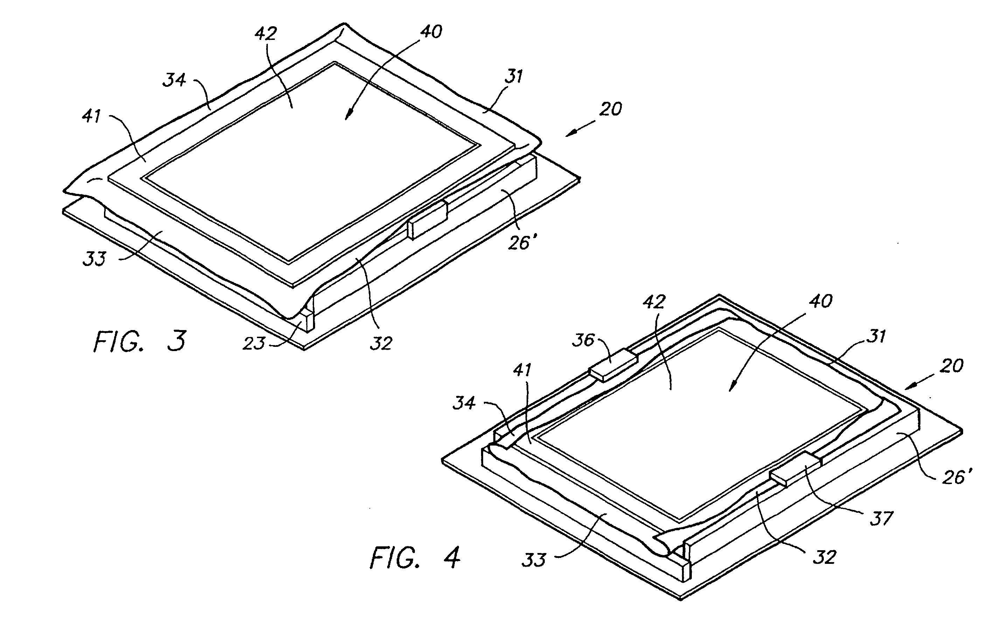

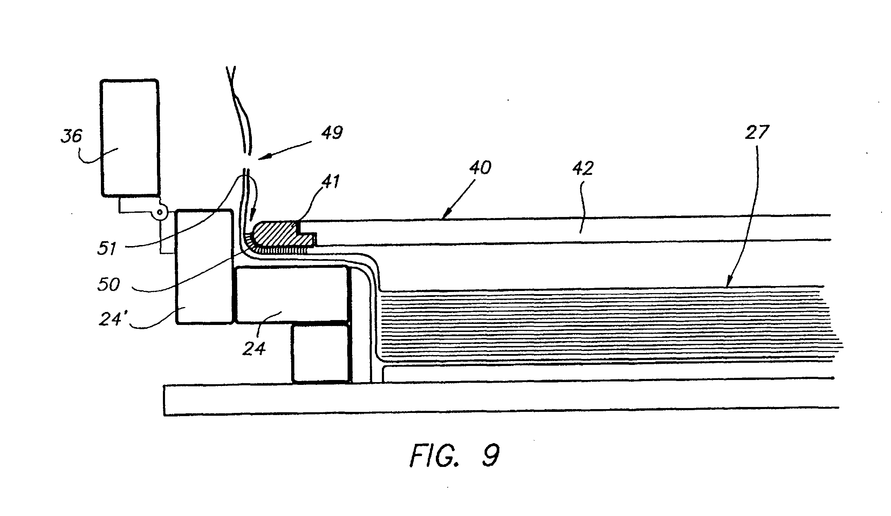

Fig. 3 shows the cassette, lid 40 lying over the unfolded wrapper portions. Lid 40 actually consists of a rectangular frame 41 made of a dimensionally stable material such as aluminium, reinforced plastic or the like, in the opening of which fits a sub-lid 42 in a lighttight way. Frame 41 fits with a slight clearance 51 between walls 24', 25' and 26' (see Fig. 9), so that corresponding flaps 31, 32 and 34 of the wrapper can outwardly extend therethrough. Flap 33, on the contrary, is not deflected but extends almost horizontally over wall 23. Frame 41 has a dual function. First, it forms a lighttight gap together with platform 38, allowing removal of the upper wrapping foil from the package as will be described hereinafter. Second, it will keep the lower wrapping foil away from the exposed stack of plates so that removal of the upper plate each time from the stack will not be hindered.

Fig. 4 shows the cassette, clamps 36 and 37 being swung inwardly so that frame 41 is now urged on base 20. The operator can now cut away the remainder of the wrapper so that in fact two separate but congruent wrapping foils are left that are kept clamped together along a peripheral zone determined by the co-operating surfaces of frame 41 and peripheral platform 38. The described cutting can occur by any means known in the art such as scissors, a knife, a specially designed cutter such as known for opening envelopes, etc.

Fig. 5 shows the removal of top foil 29 from the sheet pack. The operator grasps the free margin of this top foil and pulls in the direction of arrow 44. This margin, together with the corresponding margin of the underlying wrapping foil, lies almost flat on top of bar 23. We have found that withdrawal of the marginal portions of the upper foil through the gap left between the frame of the lid and the corresponding walls of the base does not raise any problem. The success of this operation depends to some extent on properties such as coefficient of friction, flexibility and toughness of the wrapping material. The wrapping material described hereinbefore is for all these aspects an excellent choice.

It is clear that during all these operations sub-lid 42 must keep a lighttight fit with flange 41. To that end, suitable latching means may be provided for locking the sub-lid to the base during the described preparation steps.

The cassette thus prepared is now ready for use and can be located inside a processor which is arranged for removing a plate from the cassette and image-wise exposing it.

Fig. 6 diagrammatically shows lifted sub-lid 42 inside a platesetter after occasional sub-lid latches have been released, and the position of stack 27 of plates in base 20 while bottom foil 30 of the wrapper is still in place. Clamps 36 and 37 keep frame 41 of the lid on its place on base 20. An advantage of lower wrapping foil 30 remaining in the cassette is that even in a dirty cassette the plates are kept under absolutely clean conditions.

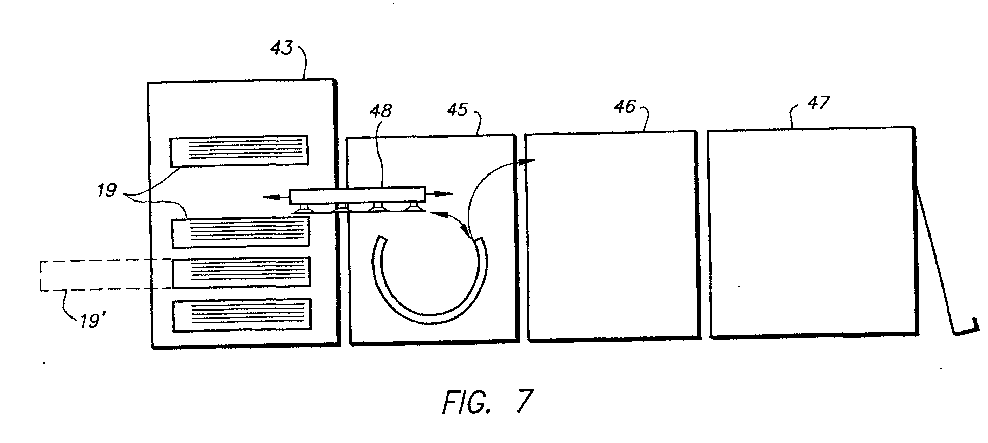

Fig. 7 is a block diagram showing a platesetter with a cassette magazine at its input.

The machine comprises a cassette magazine 43, an imaging engine 45, a buffer station 46 and a processor 47 for developing, fixing and rinsing an exposed plate. Cassette magazine 43 is arranged for containing cassettes 19 for different plate sizes, four in the present example. It should be born in mind that the cassettes all are identic, only their inside adjustment being different to accomodate a corresponding plate size. A transport system 48 comprising rails, endless belts or the like is controlled by the machine to select automatically the correct cassette for a given plate size to be exposed. The cassettes 19 in magazine 43 all are lighttightly closed. A cassette is opened only when in the imaging engine, and reclosed and returned to the handler only if a next exposure should require a different plate size. Magazine 43 may be arranged in such a way that a cassette 19 can be pulled forwardly as shown in dashed lines 19' to allow the operator to load a fresh film pack in convenient circumstances.

Imaging engine 45 can be any exposure system known in the art. In the present example, it has been represented as an internal drum recorder.

Buffer station 46 receives an image-wise exposed plate from the imaging engine and buffers it until the processor is free for a next plate. Buffer station can occasionally also be arranged for notching a plate so that after wet processing it is immediately ready for mounting in a printer.

Processor 47 can be any device known in the art suitable for developing the lithographic image, and can further include cells for silver electrolysis, for ion exchange of the rinsing water, etc.

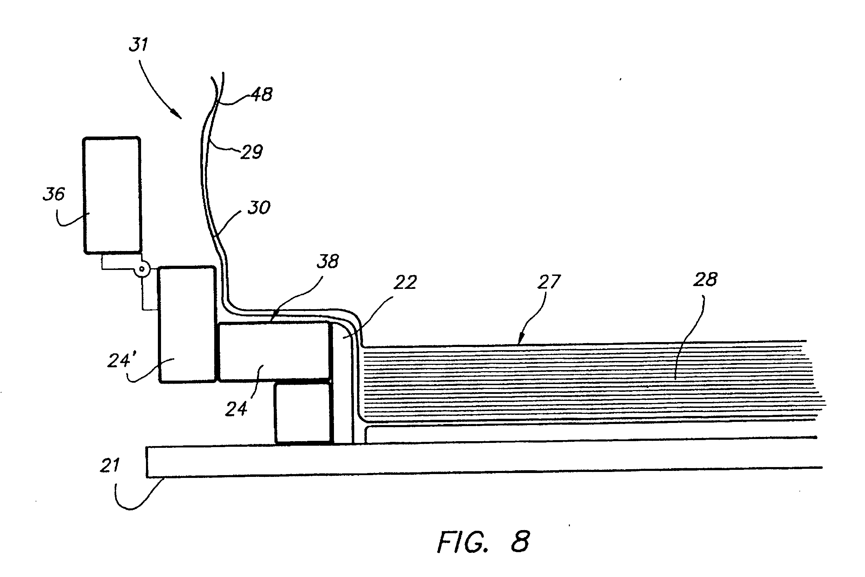

Figs. 8 to 12 are enlarged vertical sectional views on line 8-8 of Fig. 1.

Fig. 8 is a partial view showing wrapped sheet pack 27 located in base 20, unfolded flap 31 of the wrapper extending approximately upwardly from peripheral platform 38. Upper and lower wrapping foils 29, resp. 30, are air- and lighttightly sealed at or near their edges at position 48.

Fig. 9 shows sheet pack 27 after lid 40, consisting of frame 41 and sub-lid 42, has been placed on the base and the portion of the wrapping extending beyond the lid has been cut, see arrow 49. A peripheral gap 51 between frame 41 and bars 24', 25' and 26' allows the oversize wrapper portions to extend out of the cassette. Frame 41 is provided at its underside with a peripheral lining 50 of velvet or the like ensuring a lighttight fit between the frame and the base of the cassette, and also facilitate the sliding of the upper wrapping foil during its withdrawal.

Sub-lid 42 lighttightly fits in frame 41. This fit has been shown in the present figure as based on a labyrinth-like structure with co-operating stepped edges, but it is clear that any other fit comprising velvet, foamed rubber, magnetic strips or co-operating tongues and grooves may be used. Further, there may be provided latches for locking sub-lid 42 to frame 41 during the preparation steps as described already.

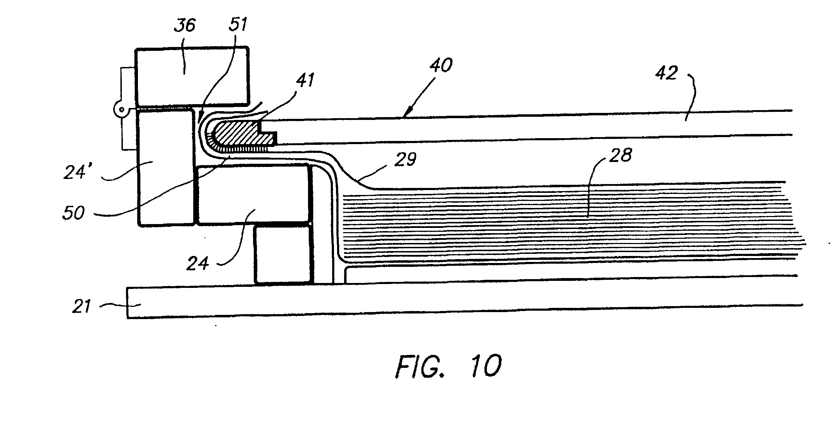

Fig. 10 shows the cassette after clamp 36 (and also clamp 37) have been swung to clamp the frame of the lid on the base.

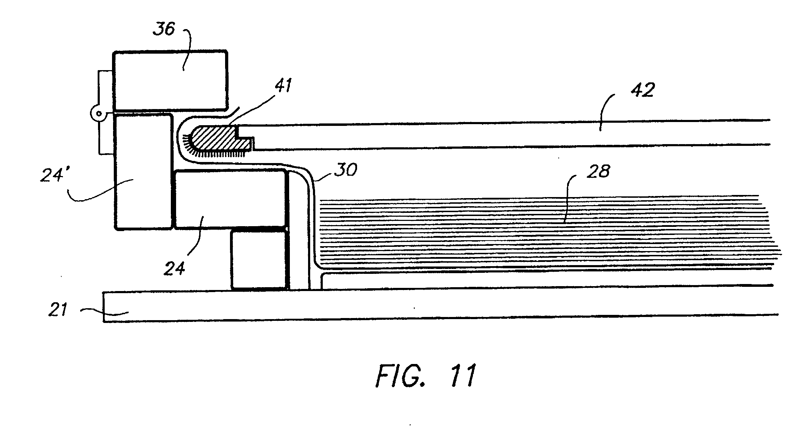

Fig. 11 shows the cassette after top foil 29 of the wrapper has been removed.

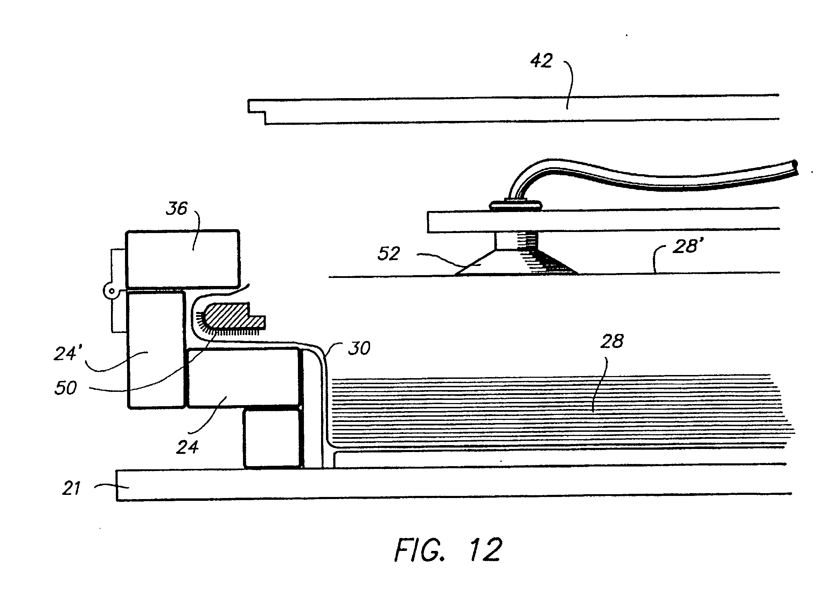

Fig. 12 shows the cassette while located inside a platesetter which has means for lifting sub-lid 42 from the base (after occasional unlocking of latches keeping the sub-lid on the frame), and also means such as suction cup 52 for removing to uppermost plate 28' from stack 28 of plates.

A cassette in accordance with the present invention is not limited to the described embodiment.

The base of the cassette must not necessarily be assembled from a base plate and a plurality of bars, but may be manufactured in one or more pieces by appropriate injection moulding techniques.

The frame of the sub-lid need not necessarily have a flat shape as shown, but may be constructed from hollow rectangular or otherwise profiled beams to obtain a rigid structure adapted for lighttight co-operation with the sub-lid.

The sub-lid can have hooks, undercuts or the like on its upper side facilitating its gripping by an opening mechanism of the platesetter.

Latches for occasionally clamping the sub-lid to the frame can be snap-in, push-release, or any other suitable latching mechanism known in the art.

There may be provided means for controlling the position of the frame of the lid in the direction of bar 23 the base. This control may be useful since it will be understood that as an operator is pulling out upper wrapping foil 29 (see Fig. 5), frame 41 tends to become displaced in that direction by friction between its underside and the foil being removed, there being no extra bar to limit displacement of the frame in that direction. Suchlike control means may comprise a lever or the like, pivoting on bar 25', and engaging with a pin a corresponding recess in sub-lid 42, as shown in dashed lines in Fig. 5 for lever 52 engaging circular recess 53. Withholding sub-lid 42 means also withholding frame 41 whereby the mentioned problem may be overcome. It is clear that many other provisions capable of limiting displacement of frame 41 in the direction of arrow 44 can be devised.

Bar 23 may be provided with an extra, raised bar such as bars 24', 25'and 26' provided for bars 24, 25 and 26. In this way the lighttightness of the cassette is further improved.

The cassette can be arranged for having sheet packs of different sizes located centrally in the cassettte, i.e. their centre coinciding with the centre of the cassette. This, however, requires more displaceable fingers for correctly positioning the sheet packs.

Finally, although in the description hereinbefore with reference to Fig. 7 it has been mentioned that the cassettes all are identic, only their inside adjustments being different, it should be understood that if a large range of different plate formats must be used, the smallest plate formats can constitute a problem since their wrappings necessarily will have large oversize flaps to still fit in the casette which on itself is large since it has to accomodate also the largest plate format. Such flaps must be folded two or more times on themselves in order to fit within the corresponding plate format. This can complicate the packaging of the plates by their manufacturer, as well as put an extra strain on the user who must carefully and completely unfold such flaps in order to ensure that their margins protrude out of the closed cassette. It is in such case better to use a small number of different cassettes, each one covering a certain number of plate formats within a limited range.

## Claims

1. A cassette (19) for daylight-loading a photographic sheet pack in a photographic processor (45,47), said sheet pack (27) being of a type comprising a stack of rectangular photographic light-sensitive sheets wrapped in a wrapper of a size larger than that of the sheets, said cassette comprising:
- a rectangular base (20) with a bottom wall (21) and peripheral wall means (23, 24, 25, 26) providing an interior space within which the sheet pack (27) can fit, and
- a cassette lid (40) fitting on the base comprising rectangular frame means (41) arranged for lighttightly co-operating with said peripheral wall means, and a sub-lid (42) lighttightly fitting on said frame means, wherein the frame means fit the peripheral wall means in such a way that the periphery of the wrapper can outwardly extend therethroug.

2. A cassette according to claim 1, wherein said rectangular frame means (41) has a size generally co-extensive with said peripheral wall means.

3. A cassette according to claim 1, which comprises positioning means for controlling the lateral position of said lid on said base.

4. A cassette according to claim 3, wherein said positioning means are elongate bars (24', 25', 26') provided on at least three lateral sides of said base for encircling said frame means.

5. A cassette according to claim 4, which comprises further positioning means (52,53) for controlling the position of said frame means also in the direction of said fourth lateral side (23).

6. A cassette according to any of claims 1 to 5, which comprises frame-locking means for locking the frame of the lid to the base.

7. A cassette according to claim 6, wherein said locking means are clamps (36, 37) that can swing over the peripheral wall means (23,24,25,26) to co-operate with the frame means (41) of the cassette lid resting thereon.

8. A cassette according to any of claims 1 to 7, wherein the surface of said frame means which faces the base of the cassette is covered with a resilient light-locking material (50).

9. A cassette according to claim 8, wherein said resilient material is velvet.

10. A cassette according to any of claims 1 to 9, which comprises sub-lid locking means for locking said sub-lid to said frame means.

11. A cassette according to any of claims 1 to 10, wherein said sub-lid (42) is completely removable from said frame means (41) and has means providing a lighttight fit with said frame.

12. A cassette according to any of claims 1 to 11, which has adjustable means (35) for locating photographic sheet packs (27) of different sizes at the correct place in its base.

13. A method for daylight-loading a photographic sheet pack in a photographic processor, said sheet pack being of a type comprising a stack of rectangular photographic sheets wrapped in an oversized wrapper, the extending portions of the wrapper being folded back on the sheet pack, said method comprising the steps of:
- unfolding the back-folded wrapper portions and putting said film pack in a cassette comprising a rectangular base with a bottom base and peripheral wall means and a cassette lid comprising rectangular frame means lighttighly fitting the peripheral wall means while yet leaving a lighttight peripheral gap through which a peripheral portion of the unfolded wrapper can protrude out of the cassette and a sub-lid lighttightly fitting on said frame means,
- cutting the wrapper protruding out of the cassette, and removing the outer portion, thereby leaving two separate wrapping foils inside of the cassette,
- pulling away the wrapping foil adjacent to the cassette lid through said peripheral gap, and
- introducing the cassette thus prepared in said photographic processor, lighttigthly closing the processor, and removing said sub-lid from the cassette by the processor to render the photographic sheets accessible for a sheet removing mechanism.

14. A method according to claim 13, which comprises daylight-loading photographic sheet packs of different sizes in a photographic processor, said different sheet packs being all wrapped in a wrapper of the same overall dimensions.

15. A method according to claim 13 or 14, wherein said photographic sheets are aluminium offset printing plates.

16. A method according to claim 13, 14 or 15, wherein said photographic processor is a computer-to-plate imagesetter.

## Patentansprüche

1. Kassette (19) zum Laden einer fotografischen Verarbeitungsmaschine (45, 47) mit einer fotografischen Bogenpackung bei Tageslicht, wobei es sich bei der Bogenpackung (27) um einen Typ handelt, bestehend aus einem Stapel rechteckiger lichtempfindlicher fotografischer Bögen, die in einen Einwickler mit größeren Abmessungen als die der Bögen eingeschlagen sind, wobei die Kassette besteht aus :
- einem rechteckigen Unterteil (20) mit einer Bodenfläche (21) und Mantelwandmittel (23, 24, 25, 26), die einen Innenraum bereitstellen, in den die Bogenpackung (27) genau passen kann, und
- einem auf den Unterteil passenden Kassettenoberteil (40), der für das lichtdichte Zusammenarbeiten mit den Mantelwandmitteln ausgelegte rechteckige Rahmenmittel (41) und einen lichtdicht auf die Rahmenmittel passenden Unterdeckel (42) umfaßt, wobei die Rahmenmittel an die Mantelwandmittel derart anliegen, dass sich der Mantel des Einwicklers nach außen hindurch erstrecken kann.

2. Kassette nach Anspruch 1, **dadurch gekennzeichnet, dass** das rechteckige Rahmenmittel (41) im allgemeinen mit den Mantelwandmitteln ausmaßgleiche Abmessungen aufweist.

3. Kassette nach Anspruch 1, die Positioniermittel zur Steuerung der seitlichen Lage des Oberteils auf dem Unterteil umfaßt.

4. Kassette nach Anspruch 3, **dadurch gekennzeichnet, dass** es sich bei den Positioniermitteln um längliche Stangen (24', 25', 26') handelt, die zum Umschlingen des Rahmenmittels auf wenigstens drei Seitenwänden des Unterteils bereitgestellt werden.

5. Kassette nach Anspruch 4, die weiterhin Positioniermittel (52,53) zur Steuerung der Lage des Rahmenmittels ebenfalls in die Richtung der vierten Seitenwand (23) umfaßt.

6. Kassette nach einem der Ansprüche 1 bis 5, die Rahmenverriegelungsmittel zum Verriegeln des Rahmens des Oberteils gegen den Unterteil umfaßt.

7. Kassette nach Anspruch 6, **dadurch gekennzeichnet, dass** es sich bei den Verriegelungsmitteln um Klemmbügel (36, 37) handelt, die zum Zusammenarbeiten mit dem Rahmenmittel (41) des sich darauf stützenden Kassettenoberteils über die Mantelwandmittel (23,24,25,26) schwenken können.

8. Kassette nach einem der Ansprüche 1 bis 7, **dadurch gekennzeichnet, dass** die dem Unterteil der Kassette zugewandte Oberfläche des Rahmenmittels mit einem federnden Lichtverschlußmaterial (50) überzogen wurde.

9. Kassette nach Anspruch 8, **dadurch gekennzeichnet, dass** es sich bei dem federnden Material um Samt handelt.

10. Kassette nach einem der Ansprüche 1 bis 9, das Unterdeckel-Verriegelungsmittel zum Verriegeln des Unterdeckels gegen das Rahmenmittel umfaßt.

11. Kassette nach einem der Ansprüche 1 bis 10, **dadurch gekennzeichnet, dass** der Unterdeckel (42) völlig von dem Rahmenmittel (41) abnehmbar ist und Mittel zur Bereitstellung einer lichtdichten Passung mit dem Rahmen aufweist.

12. Kassette nach einem der Ansprüche 1 bis 11, die verstellbare Mittel (35) zum Einlegen fotografischer Bogenpackungen (27) mit unterschiedlichen Abmessungen an der richtigen Stelle in deren Unterteil aufweist.

13. Verfahren zum Laden einer fotografischen Verarbeitungsmaschine mit einer fotografischen Bogenpackung bei Tageslicht, wobei es sich bei der Bogenpackung um einen Typ handelt, bestehend aus einem Stapel rechteckiger lichtempfindlicher fotografischer Bögen, die in einen überbemessenen Einwickler eingeschlagen sind, wobei die überstehenden Teile des Einwicklers auf der Bogenpackung zurückgefalten werden, Verfahren mit den Schritten :
- Entfalten der zurückgefaltenen Einwicklerteile und Einlegen der Filmpackung in eine Kassette, die einen rechteckigen Unterteil mit einem Bodenunterteil und Mantelwandmitteln und einen Kassettenoberteil mit lichtdicht auf die Mantelwandmittel passenden rechteckigen Rahmenmitteln, wobei jedoch ein lichtdichter Mantelschlitz, durch den ein Mantelteil des entfalteten Einwicklers aus der Kassette herausragen kann, verbleibt, und einen lichtdicht auf die Rahmenmittel passenden Unterdeckel umfaßt,
- Abschneiden des aus der Kassette herausragenden Einwicklers und Entfernen des Außenteils, indem zwei getrennte Einwickelfolien in der Kassette zurückbleiben,
- Entnehmen der an den Kassettenoberteil anliegenden Einwickelfolie durch den Mantelschlitz, und
- Einführen der so vorbereiteten Kassette in die fotografische Verarbeitungsmaschine, lichtdichtes Schließen der Verarbeitungsmaschine und Bewirken, dass die Verarbeitungsmaschine den Unterdeckel ab der Kassette nimmt, so dass die fotografischen Bögen für einen Bogenentnahmemechanismus zugänglich gemacht werden.

14. Verfahren nach Anspruch 13, mit dem Schritt : Laden einer fotografischen Verarbeitungsmaschine mit fotografischen Bogenpackungen in unterschiedlichen Größen bei Tageslicht, wobei all die unterschiedlichen Bogenpackungen in einen Einwickler mit den gleichen Gesamtabmessungen eingeschlagen wurden.

15. Verfahren nach Anspruch 13 oder 14, **dadurch gekennzeichnet, dass** es sich bei den fotografischen Bögen um Aluminium-Offsetdruckplatten handelt.

16. Verfahren nach Anspruch 13, 14 oder 15, **dadurch gekennzeichnet, dass** es sich bei der fotografischen Verarbeitungsmaschine um einen elektronischen Belichter für die direkte digitale Druckplattenbebilderung handelt.

## Revendications

1. Cassette (19) pour charger un appareil de traitement photographique (45, 47) en plein jour d'un paquet de feuilles photographiques, ledit paquet de feuilles (27) étant d'un type comportant une pile de feuilles photographiques rectangulaires sensibles à la lumière enveloppées d'une enveloppe dont les dimensions sont supérieures à celles des feuilles, ladite cassette comportant :
- un dessous rectangulaire (20) avec une paroi de fond (21) et des moyens de parois périphériques (23, 24, 25, 26) procurant une espace intérieure dans laquelle le paquet de feuilles (27) peut s'insérer, et
- un dessus de cassette (40) ajusté au dessous et comportant un moyen de cadre rectangulaire (41) agencé pour coopérer de façon étanche à la lumière avec lesdits moyens de parois périphériques, et un couvercle inférieur (42) ajusté de façon étanche à la lumière audit moyen de cadre, le moyen de cadre étant ajusté aux moyens de parois périphériques de telle façon que la périphérie de l'enveloppe puisse s'étendre à travers de ceux-ci vers l'extérieur.

2. Cassette selon la revendication 1, **caractérisée en ce que** ledit moyen de cadre rectangulaire (41) possède des dimensions généralement de la même étendue que lesdits moyens de parois périphériques.

3. Cassette selon la revendication 1, qui comporte des moyens de positionnement pour ajuster la position latérale dudit dessus sur ledit dessous.

4. Cassette selon la revendication 3, **caractérisée en ce que** lesdits moyens de positionnement sont des barres allongées (24', 25', 26') procurées sur au moins trois côtés dudit dessous afin d'encercler ledit moyen de cadre.

5. Cassette selon la revendication 4, qui comporte en outre des moyens de positionnement (52,53) pour ajuster la position dudit moyen de cadre également dans la direction dudit quatrième côté (23).

6. Cassette selon l'une quelconque des revendications 1 à 5, qui comporte des moyens de verrouillage du cadre pour verrouiller le cadre du dessus contre le dessous.

7. Cassette selon la revendication 6, **caractérisée en ce que** lesdits moyens de verrouillage sont des pièces de serrage (36, 37) pouvant basculer par-dessus les moyens de parois périphériques (23,24,25,26) pour coopérer avec le moyen de cadre (41) du dessus de la cassette étant posé sur ceux-ci.

8. Cassette selon l'une quelconque des revendications 1 à 7, **caractérisée en ce que** la surface dudit moyen de cadre orientée vers le dessous de la cassette est revêtue d'un matériau résilient scellant de façon imperméable à la lumière (50).

9. Cassette selon la revendication 8, **caractérisée en ce que** ledit matériau résilient est du velours.

10. Cassette selon l'une quelconque des revendications 1 à 9, qui comporte des moyens de verrouillage du couvercle inférieur pour verrouiller ledit couvercle inférieur contre ledit moyen de cadre.

11. Cassette selon l'une quelconque des revendications 1 à 10, **caractérisée en ce que** ledit couvercle inférieur (42) est entièrement amovible dudit moyen de cadre (41) et possède des moyens procurant un ajustage étanche à la lumière audit cadre.

12. Cassette selon l'une quelconque des revendications 1 à 11, qui possède des moyens ajustables (35) pour la mise en place de paquets de feuilles photographiques (27) de dimensions différentes à l'endroit correct dans son dessous.

13. Procédé pour charger un appareil de traitement photographique en plein jour d'un paquet de feuilles photographiques, ledit paquet de feuilles étant d'un type comportant une pile de feuilles photographiques rectangulaires enveloppées d'une enveloppe surdimensionnée, les parties dépassantes de l'enveloppe étant repliées sur le paquet de feuilles, ledit procédé comportant les étapes consistant à :
- déplier les parties repliées de l'enveloppe et introduire ledit paquet de film dans une cassette comportant un dessous rectangulaire avec un dessous de fond et des moyens de parois périphériques et un dessus de cassette comportant un moyen de cadre rectangulaire ajusté de façon étanche à la lumière auxdits moyens de parois périphériques tout en laissant néanmoins une fente périphérique étanche à la lumière à travers laquelle une partie périphérique de l'enveloppe dépliée peut faire saillie par rapport à la cassette et un couvercle inférieur ajusté de façon étanche à la lumière audit moyen de cadre,
- découper l'enveloppe faisant saillie par rapport à la cassette, et enlever la partie extérieure, tout en laissant deux pellicules à envelopper séparées dans la cassette,
- retirer la pellicule à envelopper avoisinant le dessus de la cassette à travers ladite fente périphérique, et
- introduire la cassette ainsi préparée dans ladite machine de traitement photographique, fermer la machine de traitement de façon étanche à la lumière, et provoquer l'enlèvement dudit couvercle inférieur de la cassette par la machine de traitement afin de rendre les feuilles photographiques accessibles pour un mécanisme de prélèvement de feuilles.

14. Procédé selon la revendication 13, qui comporte l'étape consistant à charger un appareil de traitement photographique en plein jour de paquets de feuilles photographiques de formats différents, les différents paquets de feuilles étant tous enveloppés d'une enveloppe des mêmes dimensions hors tout.

15. Procédé selon la revendication 13 ou 14, **caractérisé en ce que** lesdites feuilles photographiques sont des clichés d'impression offset en aluminium.

16. Procédé selon la revendication 13, 14 ou 15, **caractérisé en ce que** ladite machine de traitement photographique est une insoleuse électronique à transfert direct de l'ordinateur à la plaque.
